# FASCICULE DE BREVET EUROPEEN

(11) **EP 3 681 737 B1**
(45) Date de publication et mention de la délivrance du brevet: **13.07.2022**
(21) Numéro de dépôt: 18780175.8
(22) Date de dépôt: 21.08.2018
(51) Int. Cl.: B60C 11/03, B29D 30/06

(54) **MOULE DE BANDE DE ROULEMENT DE PNEU COMPRENANT DES CANAUX CACHÉS**
FORM FÜR EINE REIFENLAUFFLÄCHE MIT VERDECKTEN KANÄLEN
MOULD FOR A TYRE TREAD COMPRISING CONCEALED CHANNELS

(30) Priorité: 13.09.2017 FR 1758463
(43) Date de publication de la demande: 22.07.2020
(73) Titulaire: Compagnie Générale des Etablissements Michelin, 63000 Clermont-Ferrand (FR)
(72) Inventeur: COLLET, Etienne, 63040 Clermont-Ferrand Cedex 9 (FR); MARLIER, Fabien, 63040 Clermont-Ferrand Cedex 9 (FR); SCHMITT, Ludovic, 63040 Clermont-Ferrand Cedex 9 (FR); GODIN, Pierre, 63040 Clermont-Ferrand Cedex 9 (FR)
(74) Mandataire: Millanvois, Patrick Jacques Jean
(86) Numéro de dépôt international: PCT/FR2018/052087
(87) Numéro de publication internationale: WO 2019/053350

(56) Documents cités:
- EP-A2- 0 540 340
- EP-A2- 0 540 340
- US-A1- 2008 251 175
- US-A1- 2008 251 175
- US-A1- 2009 159 167
- US-A1- 2009 159 167

## Description

### DOMAINE DE L'INVENTION

L'invention concerne les moules de bandes de roulement pour pneus de poids lourd et plus particulièrement des moules permettant de mouler des dessins de sculpture de ces bandes conférant aux pneus qui en sont pourvus des performances améliorées en drainage de l'eau par temps de pluie, ces bandes de roulement ou pneus étant plus facilement réalisables industriellement. Cette même invention s'applique notamment au domaine du rechapage des pneus de poids lourd et plus particulièrement à l'obtention de bandes de roulement destinées à l'opération de rechapage.

### ÉTAT DE LA TECHNIQUE

De façon connue, l'utilisation de pneus sur véhicule dans des conditions de roulage par temps de pluie requiert une élimination rapide de l'eau présente dans la région de contact du pneu avec la chaussée afin d'assurer un bon contact du matériau constituant la bande de roulement avec cette chaussée pour générer des efforts de motricité et de freinage tout en contrôlant la trajectoire du véhicule.

Sous le terme de découpure, il faut comprendre que l'on a affaire soit à des rainures dont les largeurs sont appropriées pour empêcher la mise en contact des parois délimitant ces rainures dans les conditions d'usage prédéfinie soit à des incisions dont les parois les délimitant sont aptes à venir en contact entre elles au moins partiellement dans les conditions d'usage.

Les découpures d'orientation circonférentielles, transversales ou obliques forment un réseau d'écoulement de l'eau qui se doit d'être pérenne pour être pleinement efficace pendant toute la durée d'usage d'un pneu entre son état neuf et son retrait lorsque son usure atteint une limite fixée par la réglementation. À ce stade, il peut être procédé après une préparation de l'état de surface du pneu et si l'état du pneu le permet, à une opération de rechapage en fixant une nouvelle bande sur le pneu.

Si des rainures ou plus généralement des cavités sont indispensables au drainage de l'eau dans la région de contact avec une chaussée, la diminution de volume de matière qui en résulte sur la bande peut affecter sensiblement la performance en usure de cette bande et en conséquence réduire la durée d'utilisation du pneu résultant notamment d'une augmentation de la vitesse d'usure de ladite bande. D'autres performances du pneu peuvent aussi être affectées comme les performances en comportement, en émission de bruit en roulage, voire en résistance au roulement.

Par ailleurs, les rainures génèrent un abaissement des rigidités de compression et de cisaillement puisque ces rainures délimitent des portions de matière sensibles à la déformation comparativement aux portions délimitées par des incisions. En effet, dans le cas d'une incision, les faces de matière délimitant cette incision peuvent venir en contact l'une contre l'autre au moins en partie lors du passage dans la région de contact avec la chaussée. Cette diminution de rigidité, dans le cas de la présence de rainures, induit une augmentation des déformations et génère une diminution de la performance en usure de la bande : on observe une usure plus importante pour une distance parcourue fixée (ceci se traduit par à une augmentation de la vitesse d'usure de la bande). En outre, on constate une augmentation de la résistance au roulement et donc de la consommation des véhicules équipés de tels pneus, résultant d'une augmentation des pertes hystérétiques liées aux cycles de déformations de la matière composant la bande de roulement.

### Définitions :

Par direction radiale, on entend une direction qui est perpendiculaire à l'axe de rotation du pneu (cette direction correspond à la direction de l'épaisseur de la bande de roulement).

Par direction transversale ou axiale, on entend une direction parallèle à l'axe de rotation du pneu.

Par direction circonférentielle, on entend une direction qui est tangente à tout cercle centré sur l'axe de rotation. Cette direction est perpendiculaire à la fois à la direction axiale et à une direction radiale.

Une bande de roulement a une épaisseur maximale de matière à user en roulage ; cette épaisseur maximale correspond à la profondeur à partir de laquelle il devient nécessaire de renouveler le pneu soit par la mise en place d'une nouvelle bande de roulement par rechapage soit par le remplacement par un pneu neuf.

Une rainure est dite continue dès lors qu'elle est ouverte en totalité sur la surface de roulement à neuf et cela sur toute sa longueur selon sa direction principale.

Une rainure est dite discontinue dès lors qu'elle est formée d'une succession de parties ouvertes sur la surface de roulement à neuf, ces parties étant disjointes les unes des autres dans la direction principale de cette rainure (c'est à dire sur son étendue).

Une rainure est dite cachée, dès lors qu'elle est entièrement formée à l'intérieur de la bande de roulement à neuf et qu'elle est destinée à former une nouvelle rainure ouverte sur la surface de roulement après une usure préalable de la bande de roulement.

La surface moyenne d'une rainure continue ou discontinue est définie comme une surface virtuelle divisant cette rainure, dans la direction principale de cette rainure, en deux parties égales ou sensiblement égales en volume.

La direction principale d'une rainure correspond à la direction principale d'un écoulement d'eau dans la rainure lors d'un roulage sur une chaussée revêtue d'eau.

Les documents US 2009/159167 A1, US 2008/251175 A1, EP 0540340 A2, WO2010/030276 et WO 2011/039194 ont été identifiés comme pertinents au titre de l'état de la technique du domaine de l'invention. Pour limiter l'abaissement de rigidité liée à la présence des rainures nécessitée par le besoin d'assurer le drainage de l'eau, il a été proposé notamment dans le document WO2010/030276 de former une combinaison de rainures s'ouvrant sur la surface de roulement à neuf et d'incisions prolongées vers l'intérieur de la bande de roulement par des canaux, ces canaux étant destinés à former de nouvelles rainures après une usure partielle de la bande.

Dans le document WO 2011/039194, il a été proposé une bande de roulement pour pneu ayant une épaisseur de matière à user, cette bande étant pourvue d'une pluralité de rainures ondulantes dans l'épaisseur de la bande de roulement et s'ouvrant de façon discontinue sur la surface de roulement à neuf. La géométrie de ce type de rainure est une géométrie ondulant dans la direction de l'épaisseur de la bande en un niveau externe pouvant être la surface de roulement à neuf de la bande et un niveau interne à l'intérieur de la bande de roulement. Chaque rainure ondulante est discontinue en surface mais continue à neuf dans l'intérieur de la bande afin de permettre un écoulement de fluide. Chaque rainure ondulante est formée dans la bande de roulement par une succession de cavités externes s'ouvrant sur la surface de roulement à neuf et une pluralité de cavités internes, ces dernières étant placées radialement et en totalité à l'intérieur de la surface de roulement à l'état neuf entre les cavités externes. Les cavités internes peuvent être prévues pour être formées à des profondeurs différentes à l'intérieur de la bande. Des cavités de liaison assurent la continuité de la rainure entre les cavités internes et les cavités externes.

Pour faciliter le moulage et le démoulage de ce type de rainure ondulante, il a été proposé de combiner chaque rainure ondulante avec des incisions prolongeant les cavités internes et les cavités de liaison jusqu'à la surface de roulement à neuf.

Pour mouler et vulcaniser de telles bandes de roulement, on utilise un moule comprenant une surface de moulage sur laquelle sont prévus des éléments de relief destinés à pénétrer la matière non vulcanisée pour mouler les découpures requises dans la bande de roulement.

Il a été constaté que pour des bandes de roulement comprenant un réseau dense de découpures formées de canaux et/ou de cavités internes prolongés jusqu'à la surface de roulement par des incisions, et plus particulièrement des canaux et incisions orientés circonférentiellement, les efforts de démoulage pouvaient devenir très importants compte tenu des grandes longueurs des découpures orientées circonférentiellement. La mise en œuvre de ces efforts de démoulage peut en outre générer des défauts de moulage de la bande de roulement par arrachement de matière lors de l'extraction des éléments de reliefs hors de cette bande de roulement, ces efforts de démoulage étant amplifiés par le fait que la matière caoutchoutique est vulcanisée et en conséquence offre une plus grande résistance.

Un objectif de l'invention est de faciliter le démoulage d'une bande de roulement comprenant des canaux ou cavités internes radialement sous la surface de roulement de la bande de roulement, ces canaux ou cavités internes étant prolongés par des incisions vers une surface de cette bande. Dans ce but, il est proposé une adaptation des paramètres dimensionnels des éléments de relief que comprend un moule de pneu.

Cet objectif a été atteint en modifiant la géométrie des faces d'une lame prolongée par un cordon ayant une largeur supérieure à la largeur maximale de l'incision.

### BREF EXPOSE DE L'INVENTION

Il est proposé un moule pour mouler une bande de roulement d'un pneu, cette bande de roulement ayant une épaisseur de matière à user et une surface de roulement destinée à venir en contact avec la chaussée lors du roulage du pneu, ce moule comprenant une surface de moulage destinée à mouler la surface de roulement de la bande de roulement, cette surface de moulage comprenant au moins un élément moulant comprenant une lame et un cordon, la lame étant portée par la surface de moulage du moule pour mouler une incision dans la bande de roulement, le cordon, porté par la lame, formant une partie élargie de largeur maximale D, ce cordon étant prévu pour mouler un canal dans la bande de roulement, ce canal étant lui-même destiné à former une nouvelle rainure après usure partielle de la bande. Cet élément moulant est tel que chaque lame est délimitée par deux faces latérales faisant entre elles un angle moyen au moins égal à 6 degrés et au plus à 18 degrés, la lame ayant une largeur maximale LM à la surface du moule ou proche de la surface du moule, cette largeur diminuant progressivement pour être égale à Lm au raccordement avec le cordon, la largeur minimale Lm de la lame au raccordement avec le cordon étant au moins égale à 0.2 fois et au plus égale à 0.4 fois la largeur maximale D du cordon.

Grâce à cette disposition, il est possible d'amorcer plus facilement une séparation entre la matière caoutchoutique et l'élément moulant lors du démoulage ce qui a pour conséquence de réduire les efforts à produire pour extraire cet élément moulant de la matière vulcanisée sans qu'il y ait une incidence sur le fonctionnement de l'incision dans le pneu.

Un élément moulant ayant les caractéristiques énoncées peut notamment être réalisé en mettant en œuvre le procédé de fabrication additive décrit dans la publication de brevet WO 2016/016136.

Préférentiellement, l'angle entre les deux faces latérales de la lame est au moins égal à 6 degrés et au plus à 10 degrés,

Dans une variante préférentielle, le plan bissecteur de l'angle formé par les faces latérales de la lame fait un angle différent de zéro et au plus égal à 6 degrés avec un plan perpendiculaire à la surface du moule. Ceci permet de rendre non symétriques les efforts de démoulage entre chaque face latérale de la lame et de faciliter encore l'opération de démoulage.

Dans une autre variante préférentielle, il est judicieux que l'élément moulant soit formé d'au moins une première portion et d'au moins une deuxième portion, ces premières et ces deuxièmes portions étant placées de manière successive en alternance. Avantageusement, le plan bissecteur de l'angle formé par les faces latérales délimitant la lame dans une première portion d'élément moulant est incliné d'un angle différent du plan bissecteur formé par les faces latérales délimitant la lame dans une deuxième portion d'élément moulant. Cette rupture de continuité est également favorable pour le démoulage.

De manière avantageuse, dans cette variante, il est formé, entre une première portion d'élément moulant et une deuxième portion d'élément moulant, une portion de transition assurant la continuité de l'élément et évitant un changement brusque.

De façon préférentielle, il est formé au raccordement entre la lame et le cordon des surfaces cylindriques dont le rayon de courbure, vu dans un plan de coupe, est au moins égal à 0.6 fois et au plus égal à 2 fois la largeur maximale D du cordon.

Outre les revendications de moule, il est revendiqué une bande de roulement de pneu moulée dans un tel moule. Cette bande de roulement peut notamment être une bande utilisée pour servir au rechapage d'un pneu de véhicule poids lourd.

D'autres caractéristiques et avantages de l'invention ressortent de la description faite ci-après en référence aux dessins annexés qui montrent, à titre d'exemples non limitatifs, des formes de réalisation de l'objet de l'invention.

### BREVE DESCRIPTION DES FIGURES

La figure 1 montre une vue partielle d'un moule selon l'invention pour mouler une bande de roulement d'un pneu de poids lourd comprenant des rainures cachées prolongées vers la surface de roulement par des incisions ;
La figure 2 montre une vue en coupe du moule de la figure 1 ;
Les figures 3 et 4 montrent une même variante d'un moule de bande de roulement selon l'invention.

### DESCRIPTION DES FIGURES

Pour faciliter la lecture des figures, des signes de référence identiques sont employés pour la description de variantes de l'invention dès lors que ces signes de référence renvoient à des éléments d'une même nature qu'elle soit structurelle ou bien fonctionnelle.

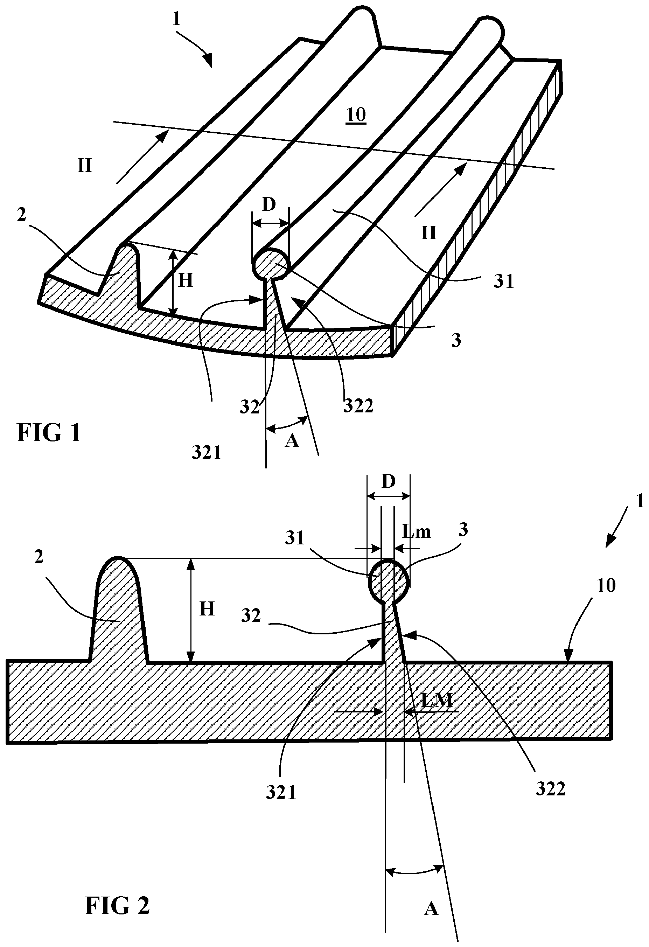

La figure 1 montre une partie d'un moule 1 servant au moulage d'une bande de roulement pour un pneu destiné à équiper un véhicule de poids lourd.

Ce moule 1 comprend une surface de moulage 10 pour mouler une surface de roulement de la bande de roulement, cette surface de roulement étant destinée à venir en contact avec une chaussée lors du roulage.

Sur cette surface de moulage 10, on distingue une nervure 2 continue dans la direction circonférentielle, cette nervure 2 ayant une hauteur totale H correspondant à la profondeur de la rainure qu'elle est destinée à mouler dans une bande de roulement (cette hauteur H est ici égale à 17 mm). La largeur de cette nervure 2 va en diminuant progressivement en partant d'une largeur maximale LM au niveau de la surface de moulage 10 et en s'éloignant de ladite surface pour atteindre une épaisseur minimale Lm. Dans le cas présent, ces épaisseurs sont respectivement 2 mm et 0.6 mm.

En outre, il est représenté un élément moulant 3 pour mouler un canal caché à l'intérieur d'une bande de roulement, ce canal étant prolongé vers la surface de roulement à neuf de la bande de roulement par une incision. La hauteur de cet élément de relief mesurée par rapport à la surface de moulage 10 est identique à la hauteur H de la nervure continue 2.

L'élément moulant 3 comprend un cordon 31 ou partie élargie de section sensiblement circulaire dans le cas présent ayant une largeur maximale D qui est ici égale à 6 mm ; cette partie élargie 31 est prolongée vers la surface du moule 10 par une lame 32 de largeur variable et décroissante progressivement en partant de la surface du moule 10 et en allant vers le cordon 31. Cette lame 32 a une largeur minimale Lm égale à 1.9 mm au niveau de son raccordement avec la partie élargie 31 et une largeur maximale LM égale à 3.5 mm au niveau de la surface du moule 10.

La lame 32 est, dans le cas présenté, limitée par deux faces planes latérales 321, 322 prenant naissance sur la surface du moule 10 et faisant entre elles un angle A égal à 13 degrés.

Dans le cas présenté et comme cela est visible sur la figure 2, montrant le même moule 1 vu en coupe selon un plan repéré par la ligne II-II sur la figure 1, la lame 32 comprend une face latérale plane 321 qui est perpendiculaire à la surface du moule 10 et une autre face latérale plane 322 inclinée d'un angle égal à 84 degrés par rapport à la surface de moulage 10 de manière à faire un angle A de 13 degrés avec l'autre face latérale 321.

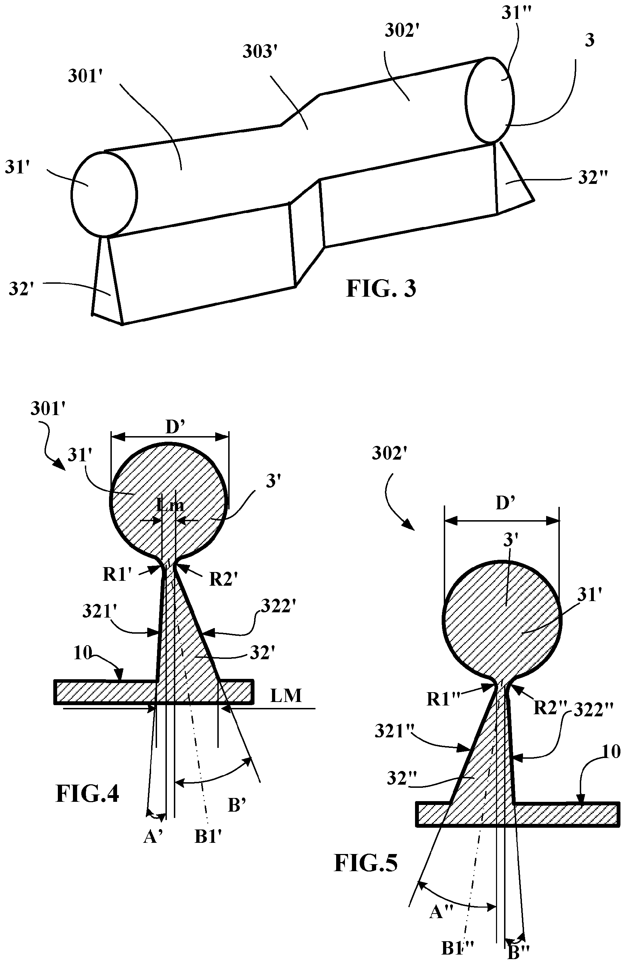

Les figures 3 à 5 montrent une variante d'un moule de bande de roulement selon l'invention.

On voit à la figure 3 une vue partielle d'un moule 1 comportant sur sa surface de moulage 10, un élément moulant 3' comprenant une première portion 301' et une deuxième portion 302", la deuxième portion 302" se plaçant dans le prolongement de la première portion 301' par l'intermédiaire d'une portion de transition 303'. Chaque portion de l'élément comprend une lame d'épaisseur variable fixée sur la surface de moulage 10 du moule, cette lame portant une partie élargie formant un cordon continu.

La première portion 301' est représentée en coupe sur la figure 3 ; cette première portion 301' comprend un cordon 31' de largeur maximale D' (égale dans le cas présent à 6 mm) maintenu à distance de la surface de moulage 10 du moule par une lame 32' ayant une épaisseur maximale LM (égale à 3.5 mm) au niveau de la surface du moule 10, cette lame 32' étant délimitée par deux faces latérales, une première face latérale 321' inclinée d'un angle A' de 2 degrés par rapport à un plan perpendiculaire à la surface de moulage 10 et une deuxième face latérale 322' inclinée d'un angle B' de 6 degrés par rapport à ce même plan. Les deux faces latérales 321', 322' font entre elles un angle de 8 degrés. La lame 32' a une épaisseur minimale Lm (égale à 1.9 mm) au raccordement avec le cordon 31'.

Le plan bissecteur de l'angle formé entre les deux faces latérales 321', 322' de la lame 32' est représenté par sa trace B1' sur le plan de la figure 3 ; ce plan bissecteur B1' fait un angle de 2 degrés par rapport au plan perpendiculaire à la surface du moule 10 et est orienté à droite par rapport à ce plan perpendiculaire B1' dans ce plan de coupe.

Une deuxième portion 302" du même élément de relief 3' est représentée en coupe sur la figure 5 ; cette deuxième portion 302" comprend un cordon 31" dans la continuité du cordon 31' de la première portion 301' qui est maintenu à distance de la surface de moulage 10 du moule par une lame 32" ayant une épaisseur maximale au niveau de la surface de moulage 10. Cette lame 32" est délimitée par deux faces latérales, une première face latérale 321" inclinée d'un angle A" de 6 degrés par rapport à un plan perpendiculaire à la surface de moulage 10 et une deuxième face latérale 322" inclinée d'un angle B" de 2 degrés par rapport à ce même plan. Les deux faces latérales font entre elles un angle de 8 degrés.

À la différence de ce qui est réalisé pour la première portion 301', pour la deuxième portion 302" le plan bissecteur de l'angle entre les faces latérales 321" et 322" de cette deuxième portion, représenté par sa trace B1" sur le plan de la figure 4, fait un angle de 2 degrés par rapport au plan perpendiculaire et est orienté à gauche par rapport à ce plan perpendiculaire dans le plan de la figure 4.

Grâce à cette disposition alternante des plans bissecteurs B1' et B1" entre la première portion 301' et la deuxième portion 302" d'un même élément moulant 3', on peut réduire de manière significative les efforts globaux à fournir pour réaliser le démoulage. La qualité du moulage des bandes de roulement s'en trouve améliorée.

En outre, il est formé entre chaque face latérale des lames 32' et 32" et la partie élargie 31' de l'élément de relief 3' une région de raccordement laquelle, vue dans le plan de coupe des figures 4 et 5, correspond à un arc de cercle tangent à la fois au cordon et à la face latérale de la lame avec laquelle il fait la liaison. Les rayons R1', R2', R1", R2" de ces arcs de cercle sont tous égaux à 3.6 mm. R1' correspond au rayon de l'arc de cercle tangent à la fois au cordon et à la face latérale 321' tandis que R2' correspond au rayon de l'arc de cercle tangent à la fois au cordon et à la face latérale 322'. Les rayons R1" et R2" sont les équivalents de ces rayons R1' et R2' pour la lame 32".

Si pour des besoins d'esthétique notamment, la partie de l'incision s'ouvrant sur la surface de roulement est pourvue d'un chanfrein sur chacune de ses faces latérales, la largeur maximale LM de l'incision est prise au dernier point de l'incision dépourvu de ce chanfrein.

L'invention concerne également une bande de roulement moulée dans un moule tel que décrit précédemment et destinée à équiper un pneu pour véhicule poids lourd.

Bien entendu, l'invention n'est pas limitée aux exemples décrits et représentés et diverses modifications peuvent y être apportées sans sortir du cadre tel que défini par les revendications. Notamment les faces de la lame peuvent être non planes ; dans pareil cas, on prend pour angle de chaque face latérale un angle moyen.

## Revendications

1. Moule (1) pour mouler une bande de roulement d'un pneu, cette bande de roulement ayant une épaisseur de matière à user et une surface de roulement destinée à venir en contact avec la chaussée lors du roulage du pneu, ce moule (1) comprenant une surface de moulage (10) destinée à mouler la surface de roulement de la bande de roulement, cette surface de moulage (10) comprenant au moins un élément moulant (3, 3') formé d'une lame (32, 32', 32") et d'un cordon (31, 31') la lame (32, 32', 32") étant portée par la surface de moulage (10) du moule pour mouler une incision dans la bande de roulement, le cordon (31, 31'), porté par la lame (32, 32', 32") pour former une partie élargie de largeur maximale D, étant prévu pour mouler un canal dans la bande de roulement, ce canal étant lui-même destiné à former une nouvelle rainure après usure partielle de la bande, cet élément moulant (3) étant tel que chaque lame (32, 32', 32") est délimitée par deux faces latérales (321, 322) faisant entre elles un angle moyen au moins égal à 6 degrés et au plus à 18 degrés, la lame (32, 32', 32") ayant une largeur maximale LM à la surface de moulage (10) du moule ou proche de la surface de moulage (10) du moule, cette largeur diminuant progressivement pour être égale à Lm au raccordement avec le cordon (31), la largeur minimale Lm de la lame (32, 32', 32") au raccordement avec le cordon (31, 31') étant au moins égale à 0.2 fois et au plus égale à 0.4 fois la largeur maximale D du cordon (31, 31').

2. Moule selon la revendication 1 **caractérisé en ce que** le plan bissecteur de l'angle formé par les faces latérales (321, 322) de la lame (32, 32', 32") fait un angle différent de zéro et au plus égal à 6 degrés avec un plan perpendiculaire à la surface de moulage (10) du moule.

3. Moule selon la revendication 1 ou la revendication 2 **caractérisé en ce que** l'élément moulant (3) est formé d'au moins une première portion (301') et une deuxième portion (302'), le plan bissecteur de l'angle formé par les faces latérales (321', 322') délimitant la lame (32') dans la première portion (301') étant incliné d'un côté par rapport à un plan perpendiculaire à la surface du moule, et d'un autre côté par rapport à un même plan perpendiculaire dans une deuxième portion (302') d'élément moulant (3).

4. Moule selon la revendication 3 **caractérisé en ce qu'**entre une première portion et une deuxième portion, il est formé une portion de transition (303') assurant la continuité de l'élément moulant (3).

5. Moule selon l'une des revendications 1 à 4 **caractérisé en ce qu'**il est formé au raccordement entre la lame (32, 32', 32") et le cordon (31, 31'), des surfaces cylindriques dont le rayon est au moins égal à 0.6 fois et au plus égal à 2 fois la largeur maximale D du cordon (31).

6. Bande de roulement ayant été moulée dans un moule selon l'une des revendications 1 à 5 et destinée à équiper un pneu de véhicule poids lourd.

7. Bande de roulement ayant été moulée dans un moule selon l'une des revendications 1 à 5 et destinée au rechapage d'un pneu de véhicule poids lourd.

## Patentansprüche

1. Form (1) zur Formung eines Laufstreifens eines Reifens, wobei dieser Laufstreifen eine Dicke aus Verschleißmaterial und eine Lauffläche aufweist, die dazu bestimmt ist, beim Rollen des Reifens mit der Fahrbahn in Kontakt zu treten, wobei diese Form (1) eine Formungsfläche (10) aufweist, die dazu bestimmt ist, die Lauffläche des Laufstreifens zu formen, wobei diese Formungsfläche (10) wenigstens ein formendes Element (3, 3') umfasst, das von einem Blatt (32, 32', 32") und einem Wulst (31, 31') gebildet ist, wobei das Blatt (32, 32', 32") von der Formungsfläche (10) der Form getragen wird, um einen Einschnitt im Laufstreifen zu formen, wobei der Wulst (31, 31'), der von dem Blatt (32, 32', 32") getragen wird, um einen vergrößerten Abschnitt mit einer maximalen Breite D zu bilden, dafür vorgesehen ist, einen Kanal im Laufstreifen zu formen, wobei dieser Kanal seinerseits dazu bestimmt ist, eine neue Rille nach teilweisem Verschleiß des Streifens zu bilden, wobei dieses formende Element (3) so beschaffen ist, dass jedes Blatt (32, 32', 32") von zwei Seitenflächen (321, 322) begrenzt ist, die zueinander einen mittleren Winkel bilden, der wenigstens gleich 6 Grad und höchstens 18 Grad ist, wobei das Blatt (32, 32', 32") eine maximale Breite LM an der Formungsfläche (10) der Form oder nahe der Formungsfläche (10) der Form aufweist, wobei diese Breite allmählich abnimmt, so dass sie am Anschluss an den Wulst (31) gleich Lm ist, wobei die minimale Breite Lm des Blatts (32, 32', 32") am Anschluss an den Wulst (31, 31') wenigstens gleich dem 0,2-fachen und höchstens gleich dem 0,4-fachen der maximalen Breite D des Wulstes (31, 31') ist.

2. Form nach Anspruch 1, **dadurch gekennzeichnet, dass** die winkelhalbierende Ebene des Winkels, der von den Seitenflächen (321, 322) des Blatts (32, 32', 32") gebildet wird, einen Winkel ungleich null und höchstens gleich 6 Grad mit einer Ebene bildet, der senkrecht zur Formungsfläche (10) der Form verläuft.

3. Form nach Anspruch 1 oder 2, **dadurch gekennzeichnet, dass** das formende Element (3) von wenigstens einem ersten Teilbereich (301') und einem zweiten Teilbereich (302') gebildet ist, wobei die winkelhalbierende Ebene des Winkels, der von den Seitenflächen (321', 322') gebildet wird, die das Blatt (32') im ersten Teilbereich (301') begrenzen, auf einer Seite im Verhältnis zu einer Ebene senkrecht zur Oberfläche der Form und auf einer anderen Seite im Verhältnis zu einer selben senkrechten Ebene in einem zweiten Teilbereich (302') des formenden Elements (3) geneigt ist.

4. Form nach Anspruch 3, **dadurch gekennzeichnet, dass** zwischen einem ersten Teilbereich und einem zweiten Teilbereich ein Übergangsteilbereich (303') gebildet ist, der die Kontinuität des formenden Elements (3) gewährleistet.

5. Form nach einem der Ansprüche 1 bis 4, **dadurch gekennzeichnet, dass** am Anschluss zwischen dem Blatt (32, 32', 32") und dem Wulst (31, 31') zylindrische Flächen gebildet sind, deren Radius wenigstens gleich dem 0,6-fachen und höchstens gleich dem 2-fachen der maximalen Breite D des Wulstes (31) ist.

6. Laufstreifen, der in einer Form nach einem der Ansprüche 1 bis 5 geformt wurde und für die Ausrüstung eines Reifens eines Lastfahrzeugs bestimmt ist.

7. Laufstreifen, der in einer Form nach einem der Ansprüche 1 bis 5 geformt wurde und für die Runderneuerung eines Reifens eines Lastfahrzeugs bestimmt ist.

## Claims

1. Mould (1) for moulding a tread of a tyre, this tread having a thickness of material to be worn away and a tread surface intended to come into contact with the road surface when the tyre is running, this mould (1) comprising a moulding surface (10) intended to mould the tread surface of the tread, this moulding surface (10) comprising at least one moulding element (3, 3') formed of a blade (32, 32', 32") and a bar (31, 31'), the blade (32, 32', 32") being borne by the moulding surface (10) of the mould so as to mould a sipe in the tread, the bar (31, 31'), borne by the blade (32, 32', 32") to form an enlarged part of maximum width D, being intended to mould a channel in the tread, this channel itself being intended to form a new groove when the tread becomes part worn, this moulding element (3) being such that each blade (32, 32', 32") is delimited by two lateral faces (321, 322) forming between them a mean angle at least equal to 6 degrees and at most to 18 degrees, the blade (32, 32', 32") having a maximum width LM at the moulding surface (10) of the mould or close to the moulding surface (10) of the mould, this width gradually decreasing to be equal to Lm at the connection with the bar (31), the minimum width Lm of the blade (32, 32', 32") at the connection with the bar (31, 31') being at least equal to 0.2 times and at most equal to 0.4 times the maximum width D of the bar (31, 31').

2. Mould according to Claim 1, **characterized in that** the plane that bisects the angle formed by the lateral faces (321, 322) of the blade (32, 32', 32") makes an angle different from zero and at most equal to 6 degrees with a plane perpendicular to the moulding surface (10) of the mould.

3. Mould according to Claim 1 or Claim 2, **characterized in that** the moulding element (3) is formed of at least a first portion (301') and a second portion (302'), the plane that bisects the angle formed by the lateral faces (321', 322') delimiting the blade (32') in the first portion (301') being inclined to one side with respect to a plane perpendicular to the surface of the mould, and to another side with respect to that same perpendicular plane in a second portion (302') of moulding element (3).

4. Mould according to Claim 3, **characterized in that** there is formed, between a first portion and a second portion, a transition portion (303') ensuring the continuity of the moulding element (3).

5. Mould according to one of Claims 1 to 4, **characterized in that** cylindrical surfaces, of which the radius is at least equal to 0.6 times and at most equal to 2 times the maximum width D of the bar (31), are formed where the blade (32, 32', 32") meets the bar (31, 31').

6. Tread having been moulded in a mould according to one of Claims 1 to 5 and intended to equip a heavy-duty vehicle tyre.

7. Tread having been moulded in a mould according to one of Claims 1 to 5 and intended for retreading a heavy-duty vehicle tyre.
